# EUROPEAN PATENT APPLICATION

(11) **EP 4 572 186 A1**
(43) Date of publication of application: **18.06.2025**
(21) Application number: 22954917.5
(22) Date of filing: 09.08.2022
(51) Int. Cl.: H04B 10/291, H04B 10/27

(54) **OPTICAL COMMUNICATION DEVICE AND OPTICAL COMMUNICATION METHOD**

(71) Applicant: NIPPON TELEGRAPH AND TELEPHONE CORPORATION, Chiyoda-ku, Tokyo 100-8116 (JP)
(72) Inventor: HAMAGAMI Ritsuki, Musashino-shi, Tokyo 180-8585 (JP); SHIBATA Naotaka, Musashino-shi, Tokyo 180-8585 (JP); KANEKO Shin, Musashino-shi, Tokyo 180-8585 (JP)
(74) Representative: Brevalex
(86) International application number: PCT/JP2022/030361
(87) International publication number: WO 2024/033995

(57) **Abstract**

Provided is an optical communication device including: one or more light distribution units configured to include a first surface having a plurality of first ports and a second surface different from the first surface having a plurality of second ports, have one or more subscriber transmission device ports to which n (n is an integer equal to or greater than 1) subscriber transmission devices are connected and one or more downlink signal ports allocated to the plurality of first ports, have one or more subscriber reception device ports to which n subscriber reception devices are connected and one or more uplink signal ports allocated to the plurality of second ports, and output optical signals input from the first ports from the second ports; and a light distribution control unit configured to control a connection relationship between the plurality of first ports and the plurality of second ports of the one or more light distribution units.

## Description

### Technical Field

The present invention relates to an optical communication device and an optical communication method.

### Background Art

In the past, an optical communication device that can relay an optical signal depending on a destination while reducing delay has been proposed (see, for example, PTL 1). In the optical communication device disclosed in PTL 1, an optical signal transmitted from a subscriber device is electrically processed only when necessary, but when not necessary, the optical signal is delivered to the opposing subscriber device without being electrically processed. Therefore, communication with a lower delay than in conventional optical communication devices based on electrical processing can be realized.

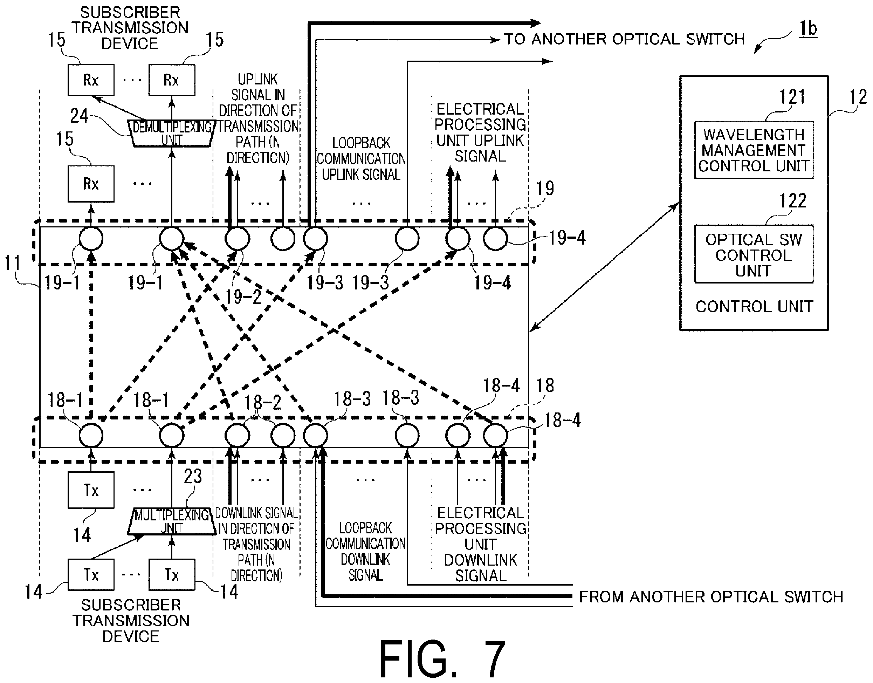

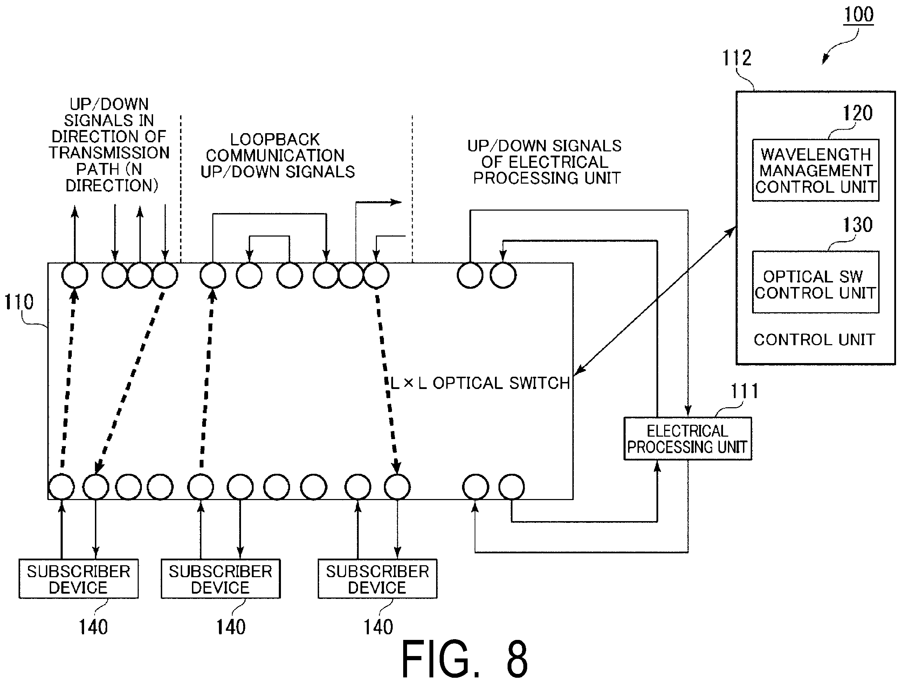

Fig. 8 is a diagram illustrating a configuration example of an optical communication system 100 including a conventional optical communication device. The optical communication system 100 includes an L×L optical switch 110, an electrical processing unit 111, and a control unit 112 that constitute an optical communication device. A plurality of subscriber devices 140 are connected to the L×L optical switch 110. The L×L optical switch 110 is connected to a plurality of optical transmission paths, and outputs an optical signal input from any of the optical transmission paths to another optical transmission path. The L×L optical switch 110 shown in Fig. 7 has L (L is an integer equal to or greater than 2) first ports and L second ports. The first ports and the second ports are provided on different surfaces. For example, the L first ports are provided on the first surface of the L×L optical switch 110, and the L second ports are provided on the second surface of the L×L optical switch 110. In this way, the L×L optical switch 110 has the same number of ports on the first surface and the second surface.

One or more subscriber device transmission/reception ports and one or more up/down signal ports of the electrical processing unit 111 are allocated to the first port of the L×L optical switch 110. The subscriber device transmission/reception port is a port to which the subscriber device 140 is connected, and is a port through which an uplink or downlink signal is input/output. The up/down signal port of the electrical processing unit 111 is a port to which the electrical processing unit 111 is connected, and is a port through which an uplink of downlink signal is input/output. Further, one or more up/down signal ports in the direction of the transmission path, one or more up/down signal ports of loopback communication, and one or more up/down signal ports of the electrical processing unit 111 are allocated to the second port of the L×L optical switch 110. The up/down signal port in the direction of the transmission path is a port to which a device other than a device connected to the same L×L optical switch 110 (for example, another L×L optical switch 110 or the like) is connected, and is a port through which an uplink or downlink signal is input/output. The up/down signal port for loopback communication is a port used for loopback communication, and is a port through which an uplink or downlink signal is input/output.

The control unit 112 includes a wavelength management control unit 120 and an optical SW control unit 130. The wavelength management control unit 120 allocates a wavelength to the subscriber device 140. For a control signal, a wavelength band for the main signal may be used, or a wavelength band different from the wavelength for the main signal may be used. The control signal may be inserted from below the L×L optical switch 110 by a coupler or the like, or may be inserted from above the L×L optical switch 110. The optical SW control unit 130 switches the path of the L×L optical switch 110. For example, the optical SW control unit 130 controls the connection of the L×L optical switch 110 in a direction in which the subscriber device 140 serving as a communication destination is located so that the subscriber device 140 connected to the L×L optical switch 110 can communicate with the subscriber device 140 serving as a communication destination. Although uplink and downlink optical signals can also be accommodated using separate optical switches, it is preferable to accommodate uplink and downlink signals using the same switch so that the number of optical switches can be reduced.

The electrical processing unit 111 processes the optical signal transmitted by the subscriber device 140 in the electrical domain as necessary. Specifically, the electrical processing unit 111 converts the optical signal transmitted by the subscriber device 140 into an electrical signal and then performs signal processing. The electrical processing unit 111 converts the electrical signal after signal processing into an optical signal again and outputs the converted optical signal. In a case where an uplink signal from the subscriber device 140 undergoes communication in the direction of the transmission path or loopback communication through the electrical processing unit 111, the optical signal enters from the first surface (first port side) of the L×L optical switch 110 and reaches the electrical processing unit 111 after being output from the uplink signal port of the electrical processing unit 111 on the second surface (second port side). The optical signal passing through the electrical processing unit 111 enters from the uplink signal port of the electrical processing unit 111 on the first surface (first port side) of the L×L optical switch 110, and is output in the direction of the transmission path on the second surface (second port side) or from the uplink signal port for loopback communication.

In a case where the optical signal in the direction of the transmission path or from a loopback communication destination is received by the subscriber device 140 through the electrical processing unit 111, the optical signal enters from the second surface (second port side) of the L×L optical switch 110 and reaches the electrical processing unit 111 after being output from the downlink signal port of the electrical processing unit 111 on the first surface (first port side). The optical signal passing through the electrical processing unit 111 enters from the downlink signal port of the electrical processing unit 111 on the second surface (second port side) of the L×L optical switch 110, and is output from the subscriber device reception port on the first surface (first port side).

### Citation List

### Patent Literature

[PTL 1] WO 2021/131001

### Summary of Invention

### Technical Problem

When passing through the electrical processing unit 111, the signal is output from either the first surface or the second surface, undergoes signal processing in the electrical domain, and then is input to the L×L optical switch 110 from the opposite surface. Therefore, the required numbers of ports on the first surface and the second surface are equal to each other. On the other hand, the number of ports required for other applications (for example, direction of the transmission path, loopback communication, or the like) is greater on the second surface to which the subscriber device 140 is not connected than on the first surface to which the subscriber device 140 is connected. For example, in a case where the number of subscriber devices 140 is n (n is an integer equal to or greater than 1) and the number of directions of the transmission path is N (N is an integer equal to or greater than 1), the required number of ports on the first surface to which the subscriber device 140 is connected is 2n (one subscriber device 140 uses two ports, uplink and downlink ports), whereas the required number of ports in the direction of the transmission path on the second surface to which the subscriber device 140 is not connected is 2nN. Further, a port for realizing loopback communication within the L×L optical switch 110 and between the L×L optical switches 110 is not required on the first surface, but is required on the second surface. In a case where there are K L×L optical switches 110 (K is an integer equal to or greater than 1), the required number of ports on the second surface is 2n(K+1).

In the conventional configuration, the required number of ports on the first surface to which the subscriber device 140 is connected is 2n+2n, and the required number of ports on the second surface to which the subscriber device 140 is not connected is 2nN+2n+2n(2nN+2n+2n(K-1)+2n in a case where the number of L×L optical switches 110 is K). In this way, the required number of ports on the second surface is greater than the required number of ports on the first surface, which leads to an asymmetric state. In such a case, when an optical switch in which the number of ports provided on the first surface and the number of ports provided on the second surface are the same as each other is used, a portion of the first port to which the subscriber device 140 is connected will become unused. In this way, in the conventional configuration as shown in Fig. 7, an optical switch in which the number of ports provided on the first surface and the number of ports provided on the second surface are the same as each other has a low user accommodation rate, and the optical switch may not be effectively utilized. Meanwhile, such a problem is not limited to an optical switch in which the number of ports provided on the first surface and the number of ports provided on the second surface are the same as each other, and also occurs in an optical switch in which the number of ports provided on the first surface and the number of ports provided on the second surface are different from each other.

In view of the above circumstances, an object of the present invention is to provide a technique that makes it possible to effectively utilize a light distribution unit such as an optical switch having a plurality of ports on each of the first surface and the second surface.

### Solution to Problem

According to an aspect of the present invention, there is provided an optical communication device including: one or more light distribution units configured to include a first surface having a plurality of first ports and a second surface different from the first surface having a plurality of second ports, have one or more subscriber transmission device ports to which n (n is an integer equal to or greater than 1) subscriber transmission devices are connected and one or more downlink signal ports allocated to the plurality of first ports, have one or more subscriber reception device ports to which n subscriber reception devices are connected and one or more uplink signal ports allocated to the plurality of second ports, and output optical signals input from the first ports from the second ports; and a light distribution control unit configured to control a connection relationship between the plurality of first ports and the plurality of second ports of the one or more light distribution units.

According to an aspect of the present invention, there is provided an optical communication method including: causing one or more light distribution units to include a first surface having a plurality of first ports and a second surface different from the first surface having a plurality of second ports, have one or more subscriber transmission device ports to which n (n is an integer equal to or greater than 1) subscriber transmission devices are connected and one or more downlink signal ports allocated to the plurality of first ports, have one or more subscriber reception device ports to which n subscriber reception devices are connected and one or more uplink signal ports allocated to the plurality of second ports, and output optical signals input from the first ports from the second ports; and controlling a connection relationship between the plurality of first ports and the plurality of second ports of the one or more light distribution units.

### Advantageous Effects of Invention

According to the present invention, it is possible to make effective use of a light distribution unit such as an optical switch having a plurality of ports on each of the first surface and the second surface.

### Brief Description of Drawings

[Fig. 1] A diagram illustrating a configuration example of an optical communication system in a first embodiment.
[Fig. 2] A sequence diagram illustrating a processing flow of the optical communication system in the first embodiment.
[Fig. 3] A diagram illustrating a configuration example of an optical communication system in Modification example 1 of the first embodiment.
[Fig. 4] A diagram illustrating a configuration example of an optical communication system in Modification example 2 of the first embodiment.
[Fig. 5] A diagram illustrating a configuration example of an optical communication system in a second embodiment.
[Fig. 6] A diagram illustrating a configuration example of an optical communication system in Modification example 2 of the second embodiment.
[Fig. 7] A diagram illustrating a configuration example of an optical communication system in a third embodiment.
[Fig. 8] A diagram illustrating a configuration example of an optical communication system including a conventional optical communication device.

### Description of Embodiments

Hereinafter, an embodiment of the present invention will be described with reference to the accompanying drawings.

### (First embodiment)

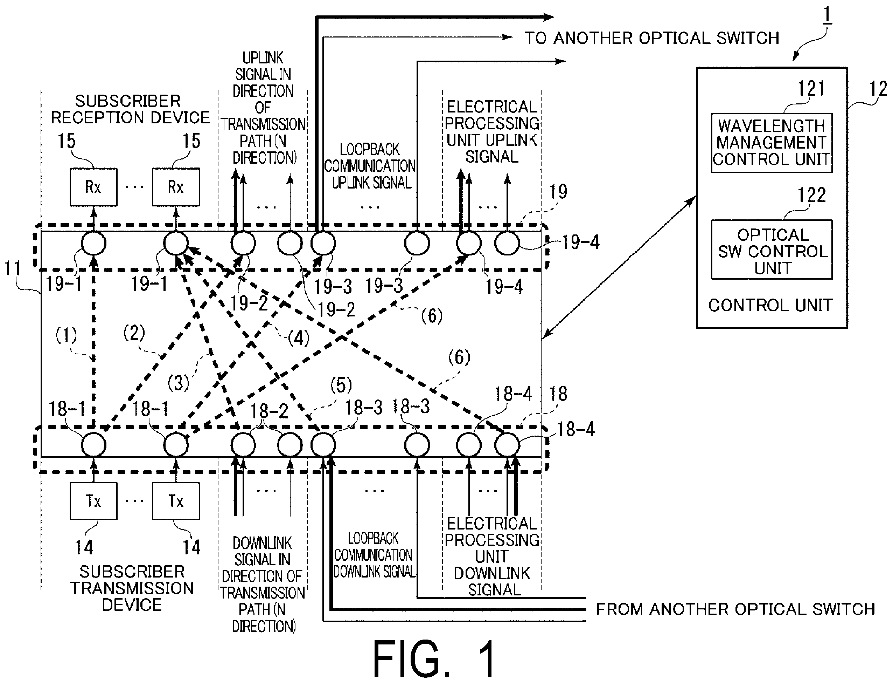

Fig. 1 is a diagram illustrating a configuration example of an optical communication system 1 in a first embodiment. The optical communication system 1 includes one L×L optical switch 11, an electrical processing unit (not shown), and a control unit 12. Meanwhile, the L×L optical switch 11, the electrical processing unit (not shown), and the control unit 12 are, for example, functional units constituting one optical communication device. Meanwhile, the optical communication system 1 does not need to include the electrical processing unit when it is not necessary.

The L×L optical switch 11 is connected to a plurality of optical transmission paths, and outputs an optical signal input from any of the optical transmission paths to another optical transmission path. The optical transmission path is, for example, an optical fiber. The L×L optical switch 11 has L first ports 18 and L second ports 19. The first ports 18 and the second ports 19 are provided on different surfaces. For example, the L first ports 18 are provided on the first surface of the L×L optical switch 110, and the L second ports 19 are provided on the second surface of the L×L optical switch 110. Thus, the L×L optical switch 11 has the same number of ports on the first surface and the second surface. The L×L optical switch 11 is an aspect of a light distribution unit.

The first ports 18 of the L×L optical switch 11 are allocated one or more subscriber transmission device ports 18-1, one or more downlink signal ports 18-2 in the direction of the transmission path, one or more loopback communication downlink signal ports 18-3, and one or more electrical processing unit downlink signal ports 18-4. The subscriber transmission device port 18-1 is a port to which a subscriber transmission device 14 (Tx in Fig. 1) that is a transmission target for an optical signal is connected. The downlink signal port 18-2 in the direction of the transmission path is a port to which a device other than a device connected to the same L×L optical switch 11 (such as, for example, another L×L optical switch 11) is connected, and is a port through which a downlink signal is input/output. The loopback communication downlink signal port 18-3 is a port used for loopback communication, and is a port through which a downlink signal is input/output. The electrical processing unit downlink signal port 18-4 is a port to which the electrical processing unit is connected, and is a port through which a downlink signal is input/output.

Further, the second ports 19 of the L×L optical switch 11 are allocated one or more subscriber reception device ports 19-1, one or more uplink signal ports 19-2 in the direction of the transmission path, one or more loopback communication uplink signal ports 19-3, and one or more electrical processing unit uplink signal ports 19-4. The subscriber reception device port 19-1 is a port to which a subscriber reception device 15 (Rx in Fig. 1) that is a reception target for an optical signal is connected. The uplink signal port 19-2 in the direction of the transmission path is a port to which a device other than a device connected to the same L×L optical switch 11 (such as, for example, another L×L optical switch 11) is connected, and is a port through which an uplink signal is input/output. The loopback communication uplink signal port 19-3 is a port used for loopback communication, and is a port through which an uplink signal is input/output. The electrical processing unit uplink signal port 19-4 is a port to which the electrical processing unit is connected, and is a port through which an uplink signal is input/output.

The number of subscriber transmission device ports 18-1 and the number of subscriber reception device ports 19-1 are equal to each other, the number of downlink signal ports 18-2 in the direction of the transmission path and the number of uplink signal ports 19-2 in the direction of the transmission path are equal to each other, the number of loopback communication downlink signal ports 18-3 and the number of loopback communication uplink signal ports 19-3 are equal to each other, and the number of electrical processing unit downlink signal ports 18-4 and the number of electrical processing unit uplink signal ports 19-4 are equal to each other. The subscriber transmission device 14 is connected to the subscriber transmission device port 18-1 of the L×L optical switch 11 through the optical transmission path. The subscriber reception device 15 is connected to the subscriber reception device port 19-1 of the L×L optical switch 11 through the optical transmission path.

The subscriber transmission device 14 is connected to the L×L optical switch 11 through an optical access network such as, for example, a passive optical network (PON). The subscriber transmission device 14 includes a light transmission unit. The light transmission unit transmits optical signals of one or more wavelengths. In this way, the subscriber transmission device 14 can communicate at any wavelength.

The subscriber reception device 15 is connected to the L×L optical switch 11 through an optical access network such as, for example, a PON. The subscriber reception device 15 includes a light reception unit. The light reception unit receives optical signals transmitted from the subscriber transmission device 14 or other devices.

The control unit 12 is connected to the L×L optical switch 11 through the optical transmission path. The control unit 12 includes a wavelength management control unit 121 and an optical SW control unit 122. The wavelength management control unit 121 allocates wavelengths to the subscriber transmission device 14 and the subscriber reception device 15. In a case where the wavelength management control unit 121 allocates wavelengths to the subscriber transmission device 14 and the subscriber reception device 15, the optical SW control unit 122 switches the path between the ports of the L×L optical switch 11 so that the subscriber transmission device 14 and the control unit 12 or the subscriber reception device 15 and the control unit 12 are connected to each other.

The optical SW control unit 122 switches connection between the ports of the L×L optical switch 11. For example, the optical SW control unit 122 switches connection between the ports of the L×L optical switch 11 so that the subscriber transmission device 14 can communicate with a desired subscriber reception device 15.

The control unit 12 stores a management table and port information. The management table includes information for identifying the subscriber transmission device 14 and the subscriber reception device 15, information on wavelengths allocated to the subscriber transmission device 14 and the subscriber reception device 15, information on a port to which the subscriber transmission device 14 or the subscriber reception device 15 is connected, and the like. The port information indicates information relating to the first ports 18 and the second ports 19.

More specifically, the port information includes, as the information relating to the first ports 18, the number of ports allocated to the subscriber transmission device port 18-1, the downlink signal port 18-2 in the direction of the transmission path, the loopback communication downlink signal port 18-3, and the electrical processing unit downlink signal port 18-4 among the L first ports 18, and information indicating which purpose each port is used for, and includes, as the information relating to the second ports 19, the number of ports allocated to the subscriber reception device port 19-1, the uplink signal port 19-2 in the direction of the transmission path, the loopback communication uplink signal port 19-3, and the electrical processing unit uplink signal port 19-4 among the L second ports 19, and information indicating which purpose each port is used for. The control unit 12 is configured to include one or more processors and memories.

Next, each communication that can be realized by the optical communication system 1 shown in Fig. 1 will be described with reference to specific examples (1) to (6). Meanwhile, the communications shown in (1) to (6) are clearly indicated by numbers in Fig. 1.
(1): When performing loopback communication between any subscriber devices (for example, the subscriber transmission device 14 and the subscriber reception device 15) accommodated in the same L×L optical switch 11, the optical SW control unit 122 controls the L×L optical switch 11 to connect the subscriber transmission device port 18-1 to which the subscriber transmission device 14 serving as a transmission target is connected and the subscriber reception device port 19-1 to which the subscriber reception device 15 serving as a transmission destination is connected.
(2): When any subscriber transmission device 14 transmits an optical signal to any subscriber device in the direction of another transmission path, the optical SW control unit 122 controls the L×L optical switch 11 to connect the subscriber transmission device port 18-1 to which the subscriber transmission device 14 serving as a transmission target is connected and the uplink signal port 19-2 in the direction of the transmission path.
(3): When any subscriber reception device 15 receives an optical signal transmitted from any subscriber device in the direction of another transmission path, the optical SW control unit 122 controls the L×L optical switch 11 to connect the subscriber reception device port 19-1 to which the subscriber reception device 15 serving as a reception target of an optical signal is connected and the loopback communication downlink signal port 18-3.
(4): When any subscriber transmission device 14 transmits an optical signal to any subscriber reception device accommodated in another L×L optical switch 11 accommodated in the same base, the optical SW control unit 122 controls the L×L optical switch 11 to connect the subscriber transmission device port 18-1 to which the subscriber transmission device 14 serving as a transmission target is connected and the loopback communication uplink signal port 19-3.
(5): When any subscriber reception device 15 receives an optical signal transmitted from any subscriber transmission device accommodated in another L×L optical switch 11 accommodated in the same base, the optical SW control unit 122 controls the L×L optical switch 11 to connect the subscriber reception device port 19-1 to which the subscriber reception device 15 serving as a reception target of an optical signal is connected and the loopback communication downlink signal port 18-3.
(6): When it is necessary to go through the electrical processing unit during the communications in (1) to (5), the optical SW control unit 122 controls the L×L optical switch 11 to connect the up/down signal port for each application (for example, any of the subscriber transmission device port 18-1, the downlink signal port 18-2 in the direction of the transmission path, the loopback communication downlink signal port 18-3, the subscriber reception device port 19-1, the uplink signal port 19-2 in the direction of the transmission path, and the loopback communication uplink signal port 19-3) and the up/down signal port for the electrical processing unit (for example, the electrical processing unit downlink signal port 18-4 or the electrical processing unit uplink signal port 19-4).

For example, when the optical signal transmitted from the subscriber transmission device 14 is transferred to the subscriber reception device 15 after going through the electrical processing unit, the optical SW control unit 122 controls the L×L optical switch 11 to connect the subscriber transmission device port 18-1 to which the subscriber transmission device 14 serving as a transmission target is connected and the electrical processing unit uplink signal port 19-4, and to further connect the electrical processing unit downlink signal port 18-4 and the subscriber reception device port 19-1 to which the subscriber reception device 15 serving as a transmission destination is connected.

As described above, it can be understood that the optical communication system 1 in the first embodiment can realize all communication patterns that could be realized with the conventional configuration.

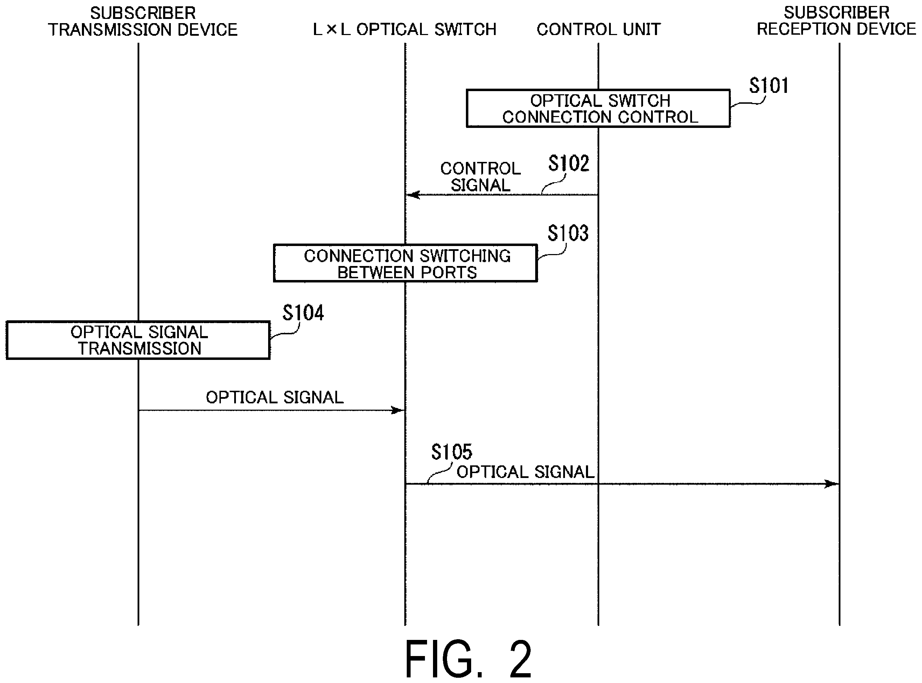

Fig. 2 is a sequence diagram illustrating a processing flow of the optical communication system 1 in the first embodiment. Meanwhile, in the processing shown in Fig. 2, the case of communication shown in (1) will be described as an example.

The optical SW control unit 122 controls the L×L optical switch 11 to connect the subscriber transmission device port 18-1 to which the subscriber transmission device 14 serving as a transmission target is connected and the subscriber reception device port 19-1 to which the subscriber reception device 15 serving as a transmission destination is connected (step S101). The optical SW control unit 122 generates a control signal including an instruction to connect the subscriber transmission device port 18-1 to which the subscriber transmission device 14 serving as a transmission target to connected and the subscriber reception device port 19-1 to which the subscriber reception device 15 serving as a transmission destination is connected. The optical SW control unit 122 transmits the generated control signal to the L×L optical switch 11 (step S102).

The L×L optical switch 11 switches connection between ports on the basis of the control signal transmitted from the optical SW control unit 122 (step S103). Specifically, the L×L optical switch 11 connects the subscriber transmission device port 18-1 to which the subscriber transmission device 14 serving as a transmission target is connected and the subscriber reception device port 19-1 to which the subscriber reception device 15 serving as a transmission destination is connected. This makes it possible for the optical signal transmitted from the subscriber transmission device 14 serving as a transmission target to be received by the subscriber reception device 15 serving as a transmission destination.

The subscriber reception device 15 serving as a transmission destination transmits the optical signal (step S104). The optical signal transmitted from the subscriber reception device 15 serving as a transmission destination is input to the subscriber transmission device port 18-1 of the L×L optical switch 11 through the optical transmission path. The subscriber transmission device port 18-1 is connected to the subscriber reception device port 19-1 to which the subscriber reception device 15 serving as a transmission destination is connected. Therefore, the optical signal input to the subscriber transmission device port 18-1 is output from the subscriber reception device port 19-1 to which the subscriber reception device 15 serving as a transmission destination is connected (step S105). In this way, the L×L optical switch 11 transfers the optical signal transmitted from the subscriber transmission device 14 serving as a transmission target to the subscriber reception device 15 serving as a transmission destination. The subscriber reception device 15 serving as a transmission destination receives the optical signal output from the L×L optical switch 11.

Next, differences between the conventional configuration (for example, the configuration shown in Fig. 7) and the configuration of the optical communication system 1 in the first embodiment in terms of connection in the L×L optical switch 11 will be described.

### (i: Subscriber port)

In the conventional configuration, both the subscriber transmission device port and the subscriber reception device port are allocated to ports on the same surface (for example, the first surface). Therefore, the number of ports used is asymmetric on the first surface and the second surface of the L×L optical switch, and the number is 2n on the first surface and 0 on the second surface. On the other hand, in configuration of the optical communication system 1 in the first embodiment, the subscriber transmission device port 18-1 and the subscriber reception device port 19-1 are allocated to different surfaces, for example, the subscriber transmission device port 18-1 is allocated to the first surface and the subscriber reception device port 19-1 is allocated to the second surface. Therefore, the number of ports used is asymmetric on the first surface and the second surface of the L×L optical switch 11, and the number is n on each surface.

### (ii: Transmission path port)

In the conventional configuration, both the uplink signal port and the downlink signal port in the direction of the transmission path are allocated to ports on the same surface (for example, the second surface). Therefore, the number of ports used is asymmetric on the first surface and the second surface of the L×L optical switch, and the number is 0 on the first surface and 2nN on the second surface. On the other hand, in the configuration of the optical communication system 1 in the first embodiment, the downlink signal port 18-2 in the direction of the transmission path and the uplink signal port 19-2 in the direction of the transmission path are allocated to different surfaces, for example, the downlink signal port 18-2 in the direction of the transmission path is allocated to the first surface and the uplink signal port 19-2 in the direction of the transmission path is allocated to the second surface. Therefore, the number of ports used is symmetric on the first surface and the second surface of the L×L optical switch 11, and the number is nN on each surface.

### (iii: Loopback communication port)

### (Loopback within the same L×L optical switch 11)

In the conventional configuration, both the uplink signal port and the downlink signal port for loopback communication are allocated to ports on the same surface (for example, the second surface) within the same L×L optical switch. Therefore, the number of ports used is asymmetric on the first surface and the second surface of the L×L optical switch, and the number is 0 on the first surface and 2n on the second surface. On the other hand, in the configuration of the optical communication system 1 in the first embodiment, as described in (i: Subscriber port), the subscriber transmission device port 18-1 to which the subscriber transmission device 14 is connected is allocated to the first surface and the subscriber reception device port 19-1 to which the subscriber reception device 15 is connected is allocated to the second surface, so that direct loopback is realized using the same L×L optical switch 11. Therefore, up/down signal wiring and ports for loopback communication within the same L×L optical switch 11 are not required.

(In case where there are K L×L optical switches 11 and loopback is required between L×L optical switches 11)

In the conventional configuration, both the uplink signal port and the downlink signal port for loopback communication between L×L optical switches are allocated to ports on the same surface (for example, the second surface). Therefore, the number of ports used is asymmetric on the first surface and the second surface of the L×L optical switch, and the number is 0 on the first surface and 2n(K-1) on the second surface. On the other hand, in the configuration of the optical communication system 1 in the first embodiment, the loopback communication downlink signal port 18-3 is allocated to the first surface, and the loopback communication uplink signal port 19-3 is allocated to the second surface. Therefore, the number of ports used is symmetric on the first surface and the second surface of the L×L optical switch 11, and the number is n(K-1) on each surface. In this case, the K L×L optical switches 11 may be expanded vertically, horizontally, or by other expansion methods.

### (iv: Electrical processing unit port)

In the conventional configuration, a pair of electrical processing unit up/down signal ports are allocated to both the first surface and the second surface. Therefore, the number of ports used is symmetric on the first surface and the second surface of the L×L optical switch, and the number is 2n on each surface. On the other hand, in the configuration of the optical communication system 1 in the first embodiment, only the electrical processing unit downlink signal port 18-4 is allocated to the first surface, and only the electrical processing unit uplink signal port 19-4 is allocated to the second surface. Therefore, the number of ports used is symmetric on the first surface and the second surface of the L×L optical switch 11, and the number is 2n on each surface.

From the above, the conventional configuration requires 2n+2n ports on the first surface and 2nN+2n+2n ports (2nN+2n+2n(K-1)+2n in a case where there are K L×L optical switches) on the second surface, and the numbers of ports are asymmetric. On the other hand, according to the configuration of the optical communication system 1 in the first embodiment, both the first surface and the second surface are symmetric with n+nN+2n(n+nN+n(K-1)+2n in a case where there are K L×L optical switches 11), and the ports of the L×L optical switch 11 can be used without excess or shortage. Further, in the configuration of the optical communication system 1 in the first embodiment, the utilization efficiency of the L×L optical switch 11 is maximized while realizing exactly the same function as the conventional function by changing the connection configuration. In the case of N = 3, L = 96, and K = 3, the maximum number n that can be accommodated within a range where the required number of ports does not exceed the number of ports L of the L×L optical switch 11 is 6 in the conventional configuration, whereas it is 12 in the present configuration, which is twice as large. Therefore, it is possible to make effective use of a light distribution unit such as an optical switch in which the number of ports provided on the first surface and the number of ports provided on the second surface are the same as each other.

### (Modification example 1 of first embodiment)

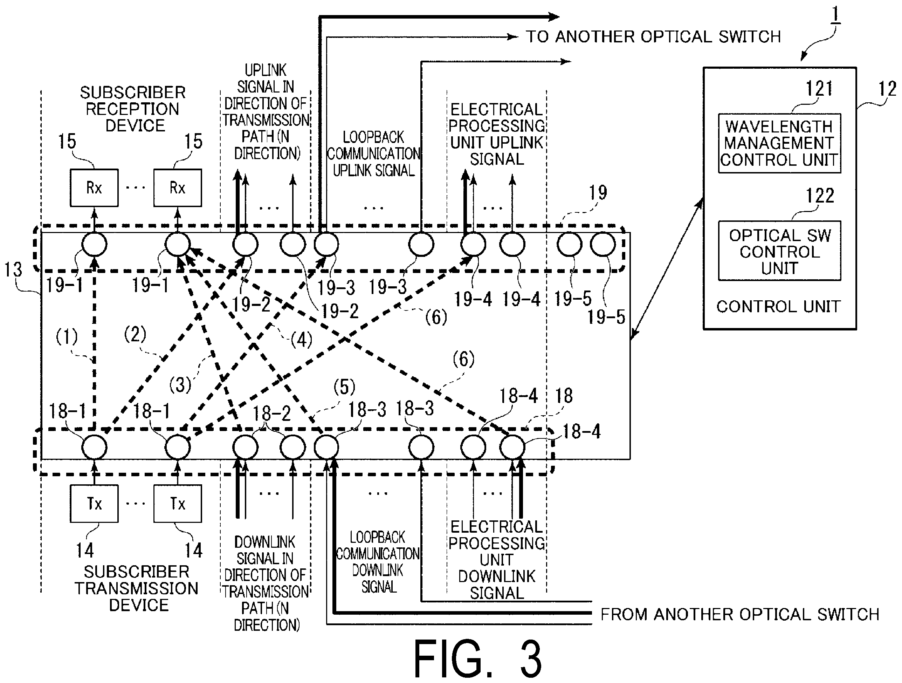

In the above-described embodiment, a configuration for making effective use of the L×L optical switch 11 in a case where the optical communication system 1 includes the L×L optical switch 11 in which the number of ports provided on the first surface and the number of ports provided on the second surface are the same as each other has been described. Instead of the L×L optical switch 11, the optical communication system 1 may be configured to include an X × Y optical switch in which the number of ports provided on the first surface and the number of ports provided on the second surface are different from each other. Fig. 3 is a diagram illustrating a configuration example of an optical communication system 1 in Modification example 1 of the first embodiment. The optical communication system 1 shown in Fig. 3 includes one X × Y optical switch 13, an electrical processing unit (not shown), and the control unit 12. Meanwhile, the X × Y optical switch 13, the electrical processing unit (not shown), and the control unit 12 are, for example, functional units constituting one optical communication device. Meanwhile, the optical communication system 1 does not need to include the electrical processing unit if it is not necessary.

The X × Y optical switch 13 has X (X is an integer equal to or greater than 2) first ports and Y second ports. The first ports and the second ports are provided on different surfaces. For example, the X first ports are provided on the first surface of the X × Y optical switch 13, and the Y second ports are provided on the second surface of the X × Y optical switch 13. Here, X and Y are different values, and Fig. 3 shows a configuration where X < Y. For example, Fig. 3 shows an example in which the number of second ports 19 provided on the second surface of the X × Y optical switch 13 is greater than the number of first ports 18 provided on the first surface of the X × Y optical switch 13. Meanwhile, the number of first ports 18 provided on the first surface of the X × Y optical switch 13 may be greater than the number of second ports 19 provided on the second surface of the X × Y optical switch 13. In this way, the number of ports of the X × Y optical switch 13 differs on the first surface and the second surface.

The optical communication system 1 shown in Fig. 3 has the same processing as the optical communication system 1 shown in Fig. 1 except for the difference in the number of ports. Meanwhile, in the optical communication system 1 shown in Fig. 3, the port 19-5 in the second port 19 may be allocated to either the subscriber reception device port 19-1, the uplink signal port 19-2 in the direction of the transmission path, the loopback communication uplink signal port 19-3, or the electrical processing unit uplink signal port 19-4. Therefore, the numbers of uplink and downlink signals are partially asymmetric. In a case where the number of first ports 18 provided on the first surface of the X × Y optical switch 13 is greater than the number of second ports 19 provided on the second surface of the X × Y optical switch 13, the port 18-5 in the first port 18 may be allocated to either the subscriber transmission device port 18-1, the downlink signal port 18-2 in the direction of the transmission path, the loopback communication downlink signal port 18-3, or the electrical processing unit downlink signal port 18-4.

In such a configuration, in the case of N = 3, X = 96, Y = 64, and K = 3, the maximum number n that can be accommodated within a range where the required number of ports does not exceed the number of ports of the X × Y optical switch 13 is 6 in the conventional configuration, where as it is 8 in the present configuration, which is 1.3 times as large. Therefore, it is also possible to make effective use in a light distribution unit such as an optical switch in which the number of ports provided on the first surface and the number of ports provided on the second surface are different from each other.

### (Modification example 2 of first embodiment)

The optical communication system 1 may include a plurality of L×L optical switches 11.

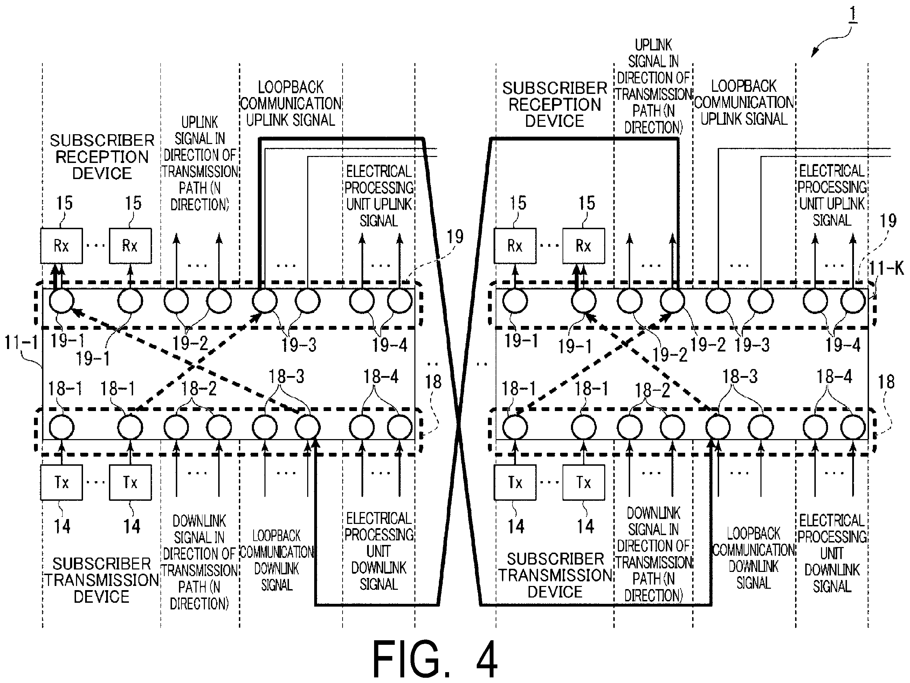

Fig. 4 is a diagram illustrating a configuration example of an optical communication system 1 in a modification example of the first embodiment. The optical communication system 1 shown in Fig. 4 includes K L×L optical switches 11-1 to 11-K, K electrical processing units (not shown), and the control unit 12 (not shown). Meanwhile, the K L×L optical switches 11-1 to 11-K, the K electrical processing units (not shown), and the control unit 12 (not shown) are, for example, functional units constituting one optical communication device. Meanwhile, the optical communication system 1 does not need to include the electrical processing unit if it is not necessary. Here, although the number of electrical processing units is the same as the number of L×L optical switches 11, the number of electrical processing units and the number of L×L optical switches 11 may be different from each other. The arrangement of a plurality of L×L optical switches 11-1 to 11-K is not limited to the horizontal arrangement as shown in Fig. 4, and may be arranged vertically or in a combination of the vertical and horizontal directions.

The optical communication system 1 shown in Fig. 4 differs ins configuration from the optical communication system 1 shown in Fig. 1 in that it includes a plurality of L×L optical switches 11. The other configurations of the optical communication system 1 shown in Fig. 4 are the same as those of the optical communication system 1 shown in Fig. 1. Therefore, differences from the optical communication system 1 shown in Fig. 1 will be described.

The L×L optical switches 11-1 to 11-K have the same configuration. Meanwhile, the port allocations may be different from or the same as each other between the L×L optical switches 11. In a case where there are a plurality of L×L optical switches 11, for example, the optical signal transmitted from the subscriber transmission device 14 accommodated in the L×L optical switch 11-1 can be transferred to the subscriber reception device 15 accommodated in the L×L optical switch 11-K, and vice versa.

Here, processing in a case where any subscriber transmission device 14 transmits an optical signal to any subscriber device (a subscriber device accommodated in another L×L optical switch 11) in the direction of another transmission path will be described. The premise is that the loopback communication uplink signal port 19-3 of the L×L optical switch 11-1 and the loopback communication downlink signal port 18-3 of the L×L optical switch 11-K are connected to each other through the optical transmission path, and that the loopback communication downlink signal port 18-3 of the L×L optical switch 11-1 and the uplink signal port 19-2 in the direction of the transmission path of the L×L optical switch 11-K are connected to each other through the optical transmission path.

First, a case where an optical signal is transmitted from the subscriber transmission device 14 accommodated in the L×L optical switch 11-1 to the subscriber reception device 15 accommodated in the L×L optical switch 11-K will be described. The optical SW control unit 122 controls the L×L optical switch 11-1 to connect the subscriber transmission device port 18-1 to which the subscriber transmission device 14 serving as a transmission target is connected and the loopback communication uplink signal port 19-3. Further, the optical SW control unit 122 controls the L×L optical switch 11-K to connect the loopback communication downlink signal port 18-3 and the subscriber reception device port 19-1 to which the subscriber reception device 15 serving as a transmission destination is connected. Thereby, the optical signal transmitted from the subscriber transmission device 14 accommodated in the L×L optical switch 11-1 is input to the loopback communication downlink signal port 18-3 of the L×L optical switch 11-K through the subscriber transmission device port 18-1 and the loopback communication uplink signal port 19-3. The optical signal input to the loopback communication downlink signal port 18-3 of the L×L optical switch 11-K is output from the subscriber reception device port 19-1 and received by the subscriber reception device 15 serving as a transmission destination.

Next, a case where an optical signal is transmitted from the subscriber transmission device 14 accommodated in the L×L optical switch 11-K to the subscriber reception device 15 accommodated in the L×L optical switch 11-1 will be described. The optical SW control unit 122 controls the L×L optical switch 11-K to connect the subscriber transmission device port 18-1 to which the subscriber transmission device 14 serving as a transmission target is connected and the uplink signal port 19-2 in the direction of the transmission path. Further, the optical SW control unit 122 controls the L×L optical switch 11-1 to connect the loopback communication downlink signal port 18-3 and the subscriber reception device port 19-1 to which the subscriber reception device 15 serving as a transmission destination is connected. Thereby, the optical signal transmitted from the subscriber transmission device 14 accommodated in the L×L optical switch 11-K is input to the loopback communication downlink signal port 18-3 of the L×L optical switch 11-1 through the subscriber transmission device port 18-1 and the uplink signal port 19-2 in the direction of the transmission path.

The optical signal input to the loopback communication downlink signal port 18-3 of the L×L optical switch 11-1 is output from the subscriber reception device port 19-1 and received by the subscriber reception device 15 serving as a transmission destination.

Meanwhile, in the optical communication system 1 shown in Fig. 4, a plurality of X × Y optical switches 13 may be provided instead of the plurality of L×L optical switches 11, or the X × Y optical switches 13 may be provided instead of some of the L×L optical switches 11.

### (Second embodiment)

In a second embodiment, a configuration in which a loopback functional unit is provided for efficient loopback communication between a plurality of optical switches will be described.

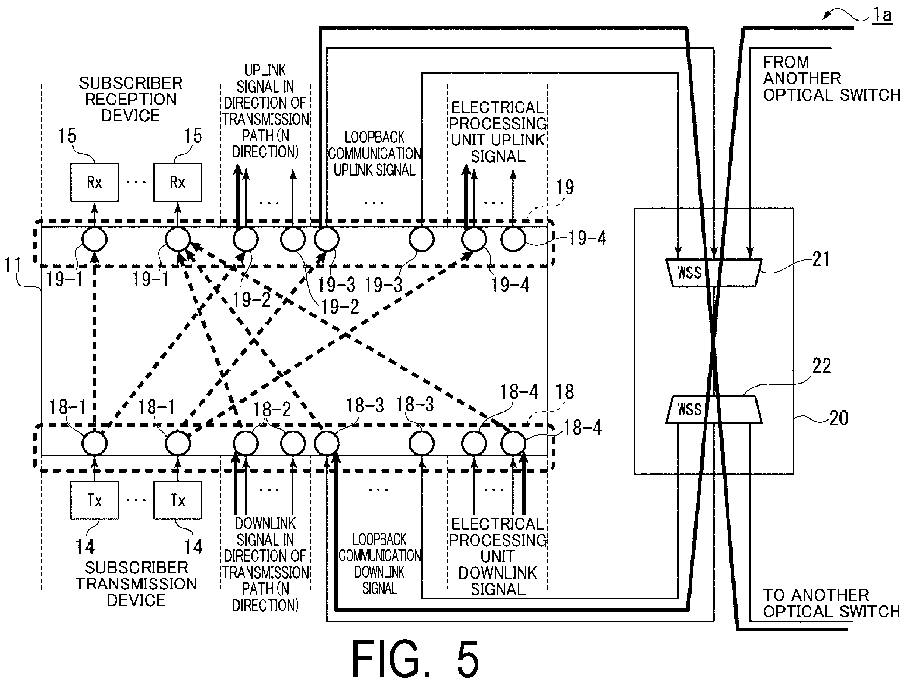

Fig. 5 is a diagram illustrating a configuration example of an optical communication system 1a in a second embodiment. The optical communication system 1a includes one L×L optical switch 11, an electrical processing unit (not shown), the control unit 12, and a loopback unit 20. Meanwhile, the L×L optical switch 11, the electrical processing unit (not shown), the control unit 12(not shown), and the loopback unit 20 are, for example, functional units constituting one optical communication device. Meanwhile, the optical communication system 1a does not need to include the electrical processing unit if it is not necessary.

The optical communication system 1a differs in configuration from the optical communication system 1 in that it further includes the loopback unit 20. The other configurations of the optical communication system 1a are the same as those of the optical communication system 1. Therefore, differences from the optical communication system 1 will be described.

The loopback unit 20 is a functional unit for performing efficient loopback communication with another L×L optical switch 11. The loopback unit 20 includes a WSS 21 and a WSS 22. The WSS 21 has a plurality of input ports and a single output port. The WSS 21 multiplexes the optical signal input to each input port and outputs it from the output port to the WSS 22. The WSS 21 is a wavelength selection-type optical switch. The WSS 22 has a single input port and a plurality of output ports. The WSS 22 demultiplexes the wavelength-multiplexed signal input to the input port for each wavelength, and distributes and outputs it to any of the plurality of output ports. Meanwhile, switching of the output ports of the WSSes 21 and 22 for each wavelength is performed by the control unit 12.

In addition to the processing shown in the first embodiment, the control unit 12 controls switching of the output port of the loopback unit 20.

In the configuration shown in Fig. 5, although the number of ports required for loopback communication changes, the point that a pair of up/down signals are required for loopback communication does not change. Therefore, it can be configured in the same way as the first embodiment.

According to the optical communication system 1a configured as described above, since the WSS is provided as the loopback unit 20, an optical signal of any wavelength can be output to the target L×L optical switch 11 by controlling the loopback unit 20. Therefore, it is possible to realize efficient loopback communication between a plurality of optical switches.

### (Modification example 1 of second embodiment)

The optical communication system 1a may be configured using the X × Y optical switch 13 instead of the L×L optical switch 11 as in the first embodiment. The optical communication system 1a configured in this way has the same processing as the optical communication system 1a shown in Fig. 5 except for the difference in the number of ports.

### (Modification example 2 of second embodiment)

The optical communication system 1a may include a plurality of L×L optical switches 11.

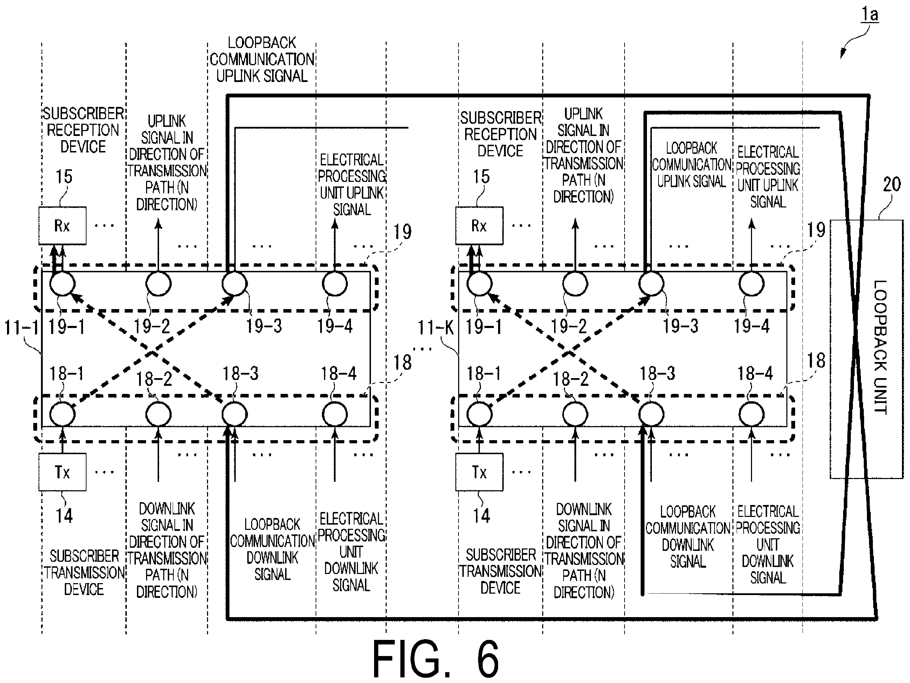

Fig. 6 is a diagram illustrating a configuration example of an optical communication system 1a in a modification example of the second embodiment. The optical communication system 1 shown in Fig. 6 includes K L×L optical switches 11-1 to 11-K, K electrical processing units (not shown), the control unit 12 (not shown), and the loopback unit 20. Meanwhile, the K L×L optical switches 11-1 to 11-K, the K electrical processing units (not shown), the control unit 12 (not shown), and the loopback unit 20 are, for example, functional units constituting one optical communication device. Meanwhile, the optical communication system 1a does not need to include the electrical processing unit if it is not necessary. Here, although the number of electrical processing units is the same as the number of L×L optical switches 11, the number of electrical processing units and the number of L×L optical switches 11 may be different from each other. The arrangement of a plurality of L×L optical switches 11-1 to 11-K is not limited to the horizontal arrangement as shown in Fig. 6, and may be arranged vertically or in a combination of the vertical and horizontal directions.

The optical communication system 1a shown in Fig. 6 differs in configuration from the optical communication system 1a shown in Fig. 5 in that it includes a plurality of L×L optical switches 11. The other configurations of the optical communication system 1a shown in Fig. 6 are the same as those of the optical communication system 1a shown in Fig. 5. Therefore, differences from the optical communication system 1a shown in Fig. 5 will be described.

The L×L optical switches 11-1 to 11-K have the same configuration. Meanwhile, the port allocations may be different from or the same as each other between the L×L optical switches 11. In a case where there are a plurality of L×L optical switches 11, for example, the optical signal transmitted from the subscriber transmission device 14 accommodated in the L×L optical switch 11-1 can be transferred to the subscriber reception device 15 accommodated in the L×L optical switch 11-K, and vice versa.

Here, processing in a case where any subscriber transmission device 14 transmits an optical signal to any subscriber device (a subscriber device accommodated in another L×L optical switch 11) in the direction of another transmission path will be described. The premise is that the loopback communication uplink signal port 19-3 of the L×L optical switch 11-1 and the loopback unit 20 are connected to each other through the optical transmission path, and that the loopback unit 20 and the loopback communication downlink signal port 18-3 of the L×L optical switch 11-K are connected to each other through the optical transmission path.

A case where an optical signal is transmitted from the subscriber transmission device 14 accommodated in the L×L optical switch 11-1 to the subscriber reception device 15 accommodated in the L×L optical switch 11-K will be described. The optical SW control unit 122 controls the L×L optical switch 11-1 to connect the subscriber transmission device port 18-1 to which the subscriber transmission device 14 serving as a transmission target is connected and the loopback communication uplink signal port 19-3. Further, the optical SW control unit 122 controls the L×L optical switch 11-K to connect the loopback communication downlink signal port 18-3 and the subscriber reception device port 19-1 to which the subscriber reception device 15 serving as a transmission destination is connected. Further, the control unit 12 controls the loopback unit 20 so that the optical signal (for example, an optical signal of a wavelength λ1) transmitted from the subscriber transmission device 14 accommodated in the L×L optical switch 11-1 is output from a port connected to the loopback communication downlink signal port 18-3 of the L×L optical switch 11-K. Thereby, the optical signal transmitted from the subscriber transmission device 14 accommodated in the L×L optical switch 11-1 is input to the loopback unit 20 through the subscriber transmission device port 18-1 and the loopback communication uplink signal port 19-3. The optical signal input to the loopback unit 20 is demultiplexed by the WSS 22 and the optical signal of a wavelength λ1 is output from a port connected to the loopback communication downlink signal port 18-3 of the L×L optical switch 11-K. The other optical signal output from the port connected to the loopback communication downlink signal port 18-3 of the L×L optical switch 11-K is input to the loopback communication downlink signal port 18-3 of the L×L optical switch 11-K. The optical signal input to the loopback communication downlink signal port 18-3 of the L×L optical switch 11-K is output from the subscriber reception device port 19-1 and received by the subscriber reception device 15 serving as a transmission destination.

Meanwhile, in the optical communication system 1a shown in Fig. 6, a plurality of X × Y optical switches 13 may be provided instead of the plurality of L×L optical switches 11, or the X × Y optical switches 13 may be provided instead of some of the L×L optical switches 11.

### (Third embodiment)

In a third embodiment, a configuration in which one port accommodates a plurality of subscribers will be described.

Fig. 7 is a diagram illustrating a configuration example of an optical communication system 1b in a third embodiment. The optical communication system 1b includes one L×L optical switch 11, an electrical processing unit (not shown), the control unit 12, a multiplexing unit 23, and a demultiplexing unit 24. Meanwhile, the L×L optical switch 11, the electrical processing unit (not shown), the control unit 12, the multiplexing unit 23, and the demultiplexing unit 24 are, for example, functional units constituting one optical communication device. Meanwhile, the optical communication system 1b does not need to include the electrical processing unit if it is not necessary.

The optical communication system 1b differs in configuration from the optical communication system 1 in that it further includes the multiplexing unit 23 and the demultiplexing unit 24. The other configurations of the optical communication system 1b are the same as those of the optical communication system 1. Therefore, differences from the optical communication system 1 will be described.

The multiplexing unit 23 multiplexes optical signals of different wavelengths transmitted from a plurality of subscriber transmission devices 14. The multiplexing unit 23 is connected to any subscriber transmission device port 18-1 through an optical transmission path. The multiplexing unit 23 is, for example, a wavelength division multiplexing (WDM) filter, a coupler, arrayed waveguide gratings (AWG), or the like.

The demultiplexing unit 24 demultiplexes or branches the optical signal output from the L×L optical switch 11. The demultiplexing unit 24 is connected to any of the subscriber reception device ports 19-1 through the optical transmission path. The multiplexing unit 23 is, for example, a wavelength division multiplexing (WDM) filter, a coupler, arrayed waveguide gratings (AWG), or the like.

The operation in the optical communication system 1b is similar to that of the optical communication system 1 except that the multiplexing unit 23 and the demultiplexing unit 24 are added.

According to the optical communication system 1b configured as described above, a plurality of subscriber transmission devices 14 or subscriber reception devices 15 can be accommodated in one port by providing the multiplexing unit 23 and the demultiplexing unit 24. Therefore, communication by more devices is possible as compared with the optical communication system 1.

### (Modification example 1 of third embodiment)

The optical communication system 1b may be configured using the X × Y optical switch 13 instead of the L×L optical switch 11 as in the first embodiment. The optical communication system 1b configured in this way has the same processing as the optical communication system 1b shown in Fig. 7 except for the difference in the number of ports.

### (Modification example 2 of third embodiment)

The optical communication system 1b may be configured to include a plurality of L×L optical switches 11 as in the first embodiment. In this case, it is not necessary for all the L×L optical switches 11 to be provided with the multiplexing unit 23 and the demultiplexing unit 24.

### (Modification example 3 of third embodiment)

The optical communication system 1b may be configured to include the loopback unit 20 as in the second embodiment.

### (Modification example 4 of third embodiment)

In a case where the optical communication system 1b includes a plurality of L×L optical switches 11, a plurality of X × Y optical switches 13 may be provided instead of the plurality of L×L optical switches 11, or the X × Y optical switches 13 may be provided instead of some of the L×L optical switches 11.

Although the embodiments of the present invention have been described in detail with reference to the drawings, a specific configuration is not limited to this embodiment, and design within the scope of the gist of the present invention, and the like are included.

### Industrial Applicability

The present invention can be applied to an optical communication system including a light distribution unit having a plurality of ports on each of the first surface and the second surface.

### Reference Signs List

11, 11-1 to 11-K L×L optical switch
12 Control unit
13 X × Y optical switch
14 Subscriber transmission device
15 Subscriber reception device
20 Loopback unit
21, 22 WSS
100, 100a, 100b Optical communication system
121 Wavelength management control unit
122 Optical SW control unit

## Claims

1. An optical communication device comprising:
one or more light distribution units configured to include a first surface having a plurality of first ports and a second surface different from the first surface having a plurality of second ports, have one or more subscriber transmission device ports to which n (n is an integer equal to or greater than 1) subscriber transmission devices are connected and one or more downlink signal ports allocated to the plurality of first ports, have one or more subscriber reception device ports to which n subscriber reception devices are connected and one or more uplink signal ports allocated to the plurality of second ports, and output optical signals input from the first ports from the second ports; and
a light distribution control unit configured to control a connection relationship between the plurality of first ports and the plurality of second ports of the one or more light distribution units.

2. The optical communication device according to claim 1, wherein the one or more downlink signal ports include any of a downlink signal port in a direction of a transmission path to which a device other than a device connected to the same light distribution unit is connected, a loopback communication downlink signal port used for loopback communication, and an electrical processing unit downlink signal port to which an electrical processing unit that processes an electrical signal is connected, and
the one or more uplink signal ports include any of an uplink signal port in a direction of a transmission path to which a device other than a device connected to the same light distribution unit is connected, a loopback communication uplink signal port used for loopback communication, and an electrical processing unit uplink signal port to which an electrical processing unit that processes an electrical signal is connected.

3. The optical communication device according to claim 2, further comprising a loopback unit composed of a plurality of wavelength selection-type switches to output an optical signal of a specific wavelength to a target light distribution unit among the one or more light distribution units,
wherein the loopback unit is connected to the loopback communication downlink signal port and the loopback communication uplink signal port.

4. The optical communication device according to any one of claims 1 to 3, further comprising:
one or more multiplexing units configured to multiplex optical signals of different wavelengths transmitted from a plurality of subscriber transmission devices; and
one or more demultiplexing units configured to branch or demultiplex the input optical signals,
wherein the one or more multiplexing units are connected to the one or more subscriber transmission device ports, and
the one or more demultiplexing units are connected to the one or more subscriber reception device ports.

5. The optical communication device according to any one of claims 1 to 3, wherein the number of first ports and the number of second ports are the same as each other, and the one or more subscriber transmission device ports, the one or more downlink signal ports, the one or more subscriber reception device ports, and the one or more uplink signal ports are allocated so that the numbers of uplink and downlink signals are symmetric.

6. The optical communication device according to any one of claims 1 to 3, wherein the number of first ports and the number of second ports are different from each other, and the one or more subscriber transmission device ports, the one or more downlink signal ports, the one or more subscriber reception device ports, and the one or more uplink signal ports are allocated so that the number of uplink and downlink signals are partially asymmetric.

7. An optical communication method comprising:
causing one or more light distribution units to include a first surface having a plurality of first ports and a second surface different from the first surface having a plurality of second ports, have one or more subscriber transmission device ports to which n (n is an integer equal to or greater than 1) subscriber transmission devices are connected and one or more downlink signal ports allocated to the plurality of first ports, have one or more subscriber reception device ports to which n subscriber reception devices are connected and one or more uplink signal ports allocated to the plurality of second ports, and output optical signals input from the first ports from the second ports; and
controlling a connection relationship between the plurality of first ports and the plurality of second ports of the one or more light distribution units.
